# EUROPEAN PATENT APPLICATION

(11) **EP 3 981 634 A1**
(43) Date of publication of application: **13.04.2022**
(21) Application number: 20201127.6
(22) Date of filing: 09.10.2020
(51) Int. Cl.: B60K 15/035, B60K 15/04, F16K 17/196, F16K 24/04

(54) **CAP FOR VEHICLE FUEL TANKS**

(71) Applicant: F.A.R.M.A. S.r.l. Fabbrica Accessori Ricambi Moto e Auto, 40059 Frazione Fossatone-Medicinia (BO) (IT)
(72) Inventor: POMA, Armando, 40060 DOZZA BO (IT)
(74) Representative: Modiano, Micaela Nadia

(57) **Abstract**

A cap for vehicle tanks, which can be arranged during use so as to close a communication path between a tank of a vehicle and the outside environment and is provided internally with a through duct (2), which is normally closed by a flow control element (3), which can move elastically at least following an increase in the value of the pressure inside the tank, in order to allow the temporary escape of air from the tank until the pressure value decreases. The cap comprises a first partition (4) for closing the duct (2), which is arranged in series to the flow control element (3) and, during use, on the side opposite to the tank; moreover, the cap (1) comprises a second partition (5) for closing the duct (2), which is arranged in series to the first partition (4) on the side opposite to the flow control element (3). The first partition (4) substantially has a shape that is inclined toward a bottom surface (6) which during use is arranged at a minimal vertical elevation and forms at least one opening (7a, 7b), which during use is arranged at a higher vertical elevation than that of the bottom surface (6). A blocking element (8) is free to move between the partitions (4, 5) within the duct (2) and during use normally rests on the bottom surface (6) and is provided with a contour that is suitable for the automatic closure of a hole (9) provided in the second partition (5), following the optional displacement of the element (8) toward the second partition (5).

## Description

The present invention relates to a cap for vehicle tanks.

As is known, some vehicles (and especially some vehicles for professional use, such as trucks and articulated trucks) are provided with two mutually communicating tanks, both designed to house the fuel required for traction. With respect to the adoption of a single tank, this solution is sometimes preferred since it makes it possible to utilize spaces in the best way and to distribute the load more uniformly.

In this context, therefore, usually a single (main) tank is provided with a filler configured for refueling, while the other (auxiliary) tank is filled simultaneously with the first one by virtue of an appropriately provided connecting tube. Sometimes, instead, both tanks can be used for refueling (the connecting tube allowing in any case the simultaneous filling of the other tank).

In order to allow refueling, in the auxiliary tank (or in any case in the tank filled by means of the tube) there must be a valve system capable of ensuring the progressive outflow of air as the level of fuel that arrives from the other tank rises in the tank itself. Furthermore, even when refueling is not performed, the valve system must allow the outflow of air in case of a pressure rise inside the tank, in order to avoid the spontaneous evaporation of fuel.

At the same time, the valve system must adopt adequate solutions to prevent the unwanted outflow of fuel from the auxiliary tank, which might occur in some circumstances, for example when, with the auxiliary tank already filled, one continues with refueling in order to complete the filling of the main tank (when the tanks are arranged at different vertical levels, in fact, their complete filling does not occur simultaneously).

This dual requirement is added to others imposed by safety standards (such as for example the one that requires the system to prevent the outflow of fuel in case of overturning of the vehicle) and this significantly complicates the provision of the valve system mounted on the auxiliary tank, to the point that the known solutions used so far have turned out to be entirely unsatisfactory.

In order to obviate this drawback, some manufacturers have resorted to solutions that simply provide a second connecting tube, which connects the upper portions of the two tanks and therefore allows the escape of air (via the second tube, it can pass from the auxiliary tank to the main tank and from there to the outside), without obviously providing any opening toward the outside in the auxiliary tank (and therefore eliminating any possibility of escape of fuel even when the auxiliary tank is full).

However, this constructive solution also is not free from drawbacks, since it requires in any case the provision of a second connecting tube, for which it is often difficult to find an adequate placement in the vehicle.

The aim of the present invention is to solve the problems described above, providing a cap for vehicle tanks that prevents in every condition the escape of fuel, ensuring at the same time adequate methods for the escape of the air.

Within this aim, an object of the invention is to provide a cap that allows the escape of air and prevents the escape of fuel, with a solution that is structurally simple and at the same time effective.

Another object of the invention is to provide a cap that avoids the danger of escape of the fuel during the refueling of the other tank to which the first tank is connected and/or in case of vehicle overturning.

Another object of the invention is to provide a cap that ensures high reliability in operation while complying with the various and possibly contrasting requirements dictated by customers and/or by the applicable statutory provisions.

Another object of the invention is to propose a cap that adopts a technical and structural architecture that is alternative to those of caps of the known type.

Another object of the invention is to provide a cap that can be obtained easily starting from commonly commercially available elements and materials.

Another object of the invention is to provide a cap that has low costs and is safe in application.

This aim and these and other objects which will become more apparent hereinafter are achieved by a cap according to claim 1, a tank according to claim 13 and a vehicle according to claim 14.

Further characteristics and advantages of the invention will become more apparent from the description of two preferred but not exclusive embodiments of the cap according to the invention, illustrated by way of non-limiting example in the accompanying drawings, wherein:
Figure 1 is a front elevation view of the cap according to the invention in the first embodiment;
Figure 2 is a sectional view of Figure 1, taken along the plane II-II;
Figure 3 is a sectional view of Figure 2, taken along the plane III-III;
Figure 4 is a front elevation view of the cap according to the invention in the second embodiment;
Figure 5 is a sectional view of Figure 4, taken along the plane V-V;
Figure 6 is a sectional view of Figure 5, taken along the plane VI-VI.

With particular reference to the figures, the reference numeral 1 generally designates a cap for vehicle tanks. More precisely, typically the cap 1 is designed to be applied in cars and especially in trucks, articulated trucks, earth-moving machines and similar vehicles for professional use (especially those of large size needing the capability to store large volumes of fuel). In any case, the installation of the cap 1 on other types of vehicles is not excluded and is therefore in any case within the protective scope claimed herein.

The cap 1 can be placed during use so as to close a communication path between one tank of the vehicle and the outside environment and this path can be constituted by a simple mouth provided along the shell of the tank, such as a filler, a ventilation tube, or others still.

Therefore, although the protection claimed herein relates first of all to an individually sold cap 1, in the preceding paragraph and in the paragraphs that follow the expression "in use" identifies and will identify the specific condition in which the cap 1 is coupled (detachably or non-detachably) to the tank at the communication path, so as to normally prevent any transit of material between the inside and the outside of the tank (except under the particular conditions that will be described hereinafter).

For reasons that will be evident in the continuation of the present description, it is specified that (in use) the cap 1 is preferably designed to be mounted on the top of the respective tank, in the orientation with which it is shown in the accompanying figures.

Moreover, it is useful to stress that the particularities of the cap 1 are enhanced when the latter is associated with an auxiliary tank of the vehicle, i.e., with a second tank which is connected (typically by means of a tube) to the main tank, configured for the refueling of the vehicle. During refueling, therefore, the user never has the opportunity to interact directly with the tank closed by the cap 1, since the refueling nozzle is inserted in the other tank and the filling of the auxiliary tank occurs by means of the connecting tube. Likewise, it is not excluded that the tank on which the cap 1 is fitted also might be used directly for refueling (even in this case, anyway, the cap 1 mainly performs its functions, described in the pages that follow, when refueling affects the other tank and in any case the cap 1 is not touched by the user during refueling).

In all these contexts, therefore, during refueling the cap 1 is designed to be kept constantly so as to close the respective communication path of the tank; the coupling between the cap 1 and the latter can therefore be of the fixed or removable type, in the latter case to allow for example inspection or maintenance interventions.

In any case, it is not excluded to resort to the cap 1 in other situations and for other tanks, used with the method described above or not.

In the accompanying figures, the tank (which therefore is extended typically below the cap 1 with respect to the orientation of said figures) is not shown, but it can be of a known type; furthermore, the specific method in which its coupling to the cap 1 is provided can be of a known type and therefore these are aspects that the person skilled in the art can deduce immediately and will not be dwelt upon further in the present description.

The cap 1 is provided internally with a through duct 2 (which directly or indirectly puts the tank in contact with the outside environment), which is normally closed by a flow control element 3, which can move elastically at least following an increase in the pressure value inside the tank (above a predefined threshold), in order to allow the temporary escape of air from the tank until the pressure value decreases.

This increase in the pressure value occurs first of all during the filling of the tank on which the cap 1 is fitted, when said filling occurs through the tube for connection to the other tank of the vehicle 1: the level of fuel rises progressively and presses the air pocket that is present upward (in communication with the duct 2). The displacement of the flow control element 3 makes it possible to make air escape from the tank through the duct 2 (toward the outside environment) and this allows the progressive filling of said tank.

The increase in the pressure value can also occur under other circumstances (for example due to heat) and the consequent displacement of the flow control element 3 avoids the danger of spontaneous evaporation and the possible and even more unwelcome bulging of the tank.

According to the invention, the cap 1 comprises a first partition 4 for closing the duct 2, which is arranged in series to the flow control element 3 (along the duct 2) and which, during use, is arranged on the side opposite to the tank (therefore, as in the accompanying figures, during use is arranged at a higher vertical elevation than the flow control element 3).

The cap 1 further comprises a second partition 5 for closing the duct 2, which is arranged in series to the first partition 4 (along the duct 2), on the side opposite to the flow control element 3 (therefore, as in the accompanying figures, during use it is arranged at a higher vertical elevation than the flow control element 3 and the first partition 4).

The first partition 4 substantially has an orientation that is inclined toward a (closed) bottom surface 6, which during use is arranged at a minimal vertical elevation; furthermore, the first partition 4 forms at least one opening 7a, 7b, which during use is arranged at a higher vertical elevation than the bottom surface 6.

In other words, the bottom surface 6 is the portion of the first partition 4 that is arranged furthest downward, when during use the cap 1 is arranged so as to close the tank (therefore in the orientation of the accompanying figures); in an equivalent manner, it is possible to consider the bottom surface 6 the portion of the first partition 4 that is closest to the flow control element 3. The opening 7a, 7b is in turn arranged during use higher than or at a greater distance from the flow control element 3 than the bottom surface 6.

Furthermore, according to the invention, a blocking element 8 is free to move inside the duct 2 between the partitions 4, 5 and during use remains normally resting on the bottom surface 6: in the absence of specific stresses and with the cap 1 mounted on the tank, obviously the element 8 by gravity can only arrange itself on the bottom surface 6, since the latter is at a minimal vertical elevation and the first partition 4, as shown, has an orientation that is inclined toward the bottom surface 6.

The element 8 further has a contour that is suitable for the automatic closure of a hole 9 provided in the second partition 5, following the possible displacement of the element 8 toward the second partition 5. In other words, if the element 8 is pushed toward the second partition 5, the shape and dimensions of the element 8 and of the hole 9 are such as to allow the closure of the latter by the former.

It should be noted that the element 8 can be pushed automatically toward the second partition 5 if the compartment 10 delimited by the partitions 4, 5 and by the duct 2 is progressively filled with fuel (which enters the compartment 10 through the opening 7a, 7b when the tank is full). For this purpose, the element 8 is chosen with such dimensions and weight as to be able to be drawn by the fuel toward the hole 9, when the compartment 10 progressively fills with fuel. In this case, the element 8 can be arranged so as to close the hole 9 in order to prevent the fuel from escaping outward.

Furthermore, the element 8 by gravity moves automatically to close the hole 9 when the vehicle is tilted or overturned (for example as a consequence of an accident), preventing any subsequent escape of fuel.

It is instead stressed that the escape of air, which in the conditions already shown is allowed by the movement of the flow control element 3, does not affect in any way the element 8: the air that arrives from the tank reaches the compartment 10 through the openings 7a, 7b and flows out of it by virtue of the hole 9, without striking or affecting the element 8, which as shown remains on the bottom surface 6, at a lower elevation than the openings 7a, 7b (and therefore at an adequate distance from the path of the escaping air). This is true for any escape of air, of any intensity, and therefore also as soon as refueling starts, in which, as is known, a sudden increase in the pressure in the tank occurs.

In particular, in the preferred embodiment, shown in the accompanying figures by way of non-limiting example of the application of the invention, the element 8 is shaped like a sphere, which has a diameter that is larger than the diameter of the hole 9, which is circular.

Even more particularly, in an embodiment of considerable practical interest, the element 8 is shaped like a hollow (and rigid) sphere, which is configured to float on the free surface of the fuel designed to refill the vehicle and can be stored in the tank (on which the cap 1 is mounted). Thus, the element 8 is arranged automatically so as to close the hole 9, when during use the compartment 10 delimited by the partitions 4, 5 and by the duct 2 is filled by the fuel. In fact, when the level of the fuel that enters through the openings 7a, 7b rises within the compartment 10, the element 8 rises in elevation (by floating on the free surface of the fuel) until it abuts against the second partition 5 when the compartment 10 is substantially completed filled with fuel: under this circumstance the element closes the hole 9 and prevents the escape of fuel. The protective scope claimed herein includes the possibility that floating is obtained also with other shapes of the element 8 (be it hollow or not).

Usefully, whether it is a sphere or other shape, the element 8 can have a density comprised between 0.88 g/cm³ and 0.99 g/cm³ (less than that of water, equal to 1 g/cm³) and preferably has a density equal to 0.92 g/cm³.

The weight and density of the element 8 are in any case chosen in each instance in the most appropriate manner as a function of the fuel for which the tank on which the cap 1 is mounted is intended.

It is in fact sufficient to choose a shape, dimensions and weight such as to ensure that the element 8 (be it a sphere or not) can be pushed and drawn toward the hole 9 (even in the absence of actual flotation) by the fuel that enters the compartment 10. Obviously, this choice is also suitable to allow by simple gravity the movement of the element 8 toward the hole 9 in case of partial or total overturning of the vehicle.

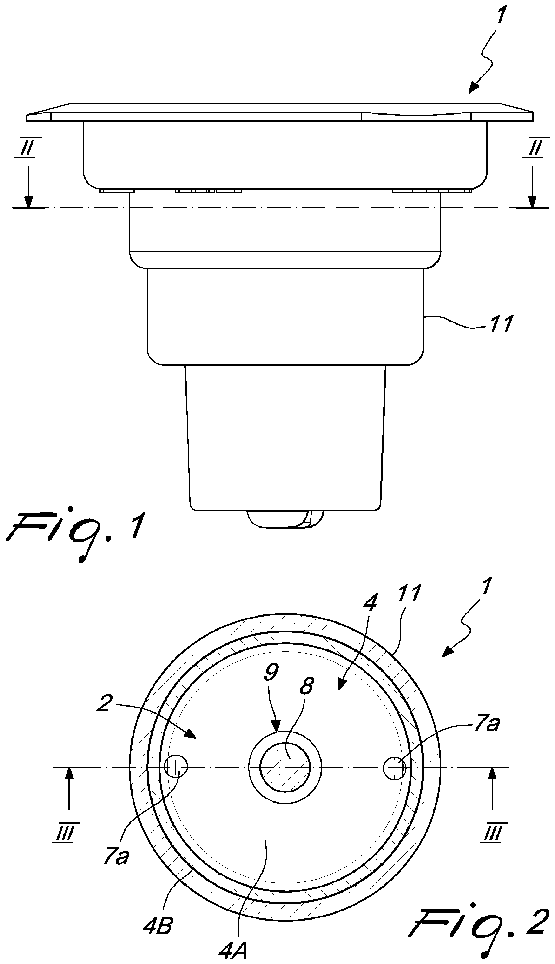

In a first embodiment of the invention, shown in Figures 1-3, the opening 7a is constituted by an orifice provided along an inclined wall 4A of the first partition 4.

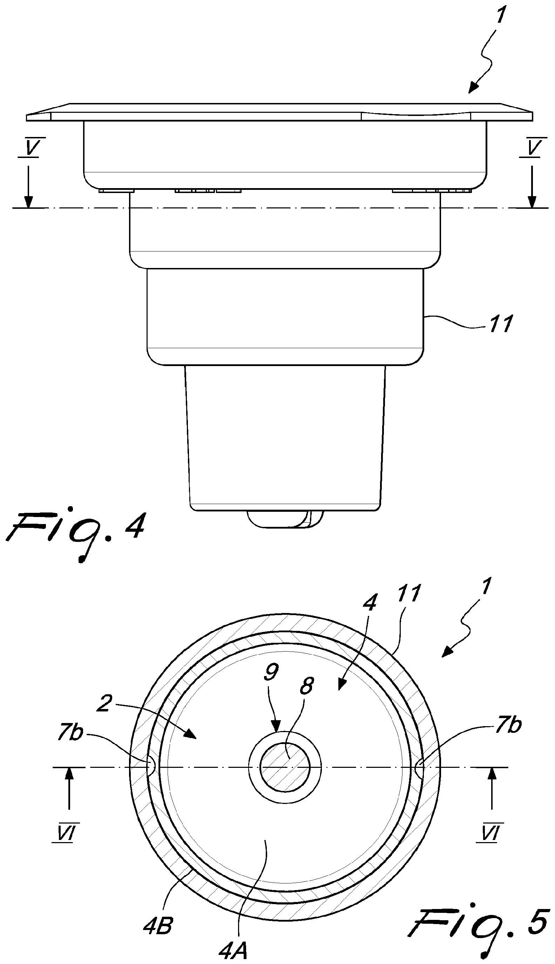

In a second embodiment of the invention, shown in Figures 4-6, the opening 7b is constituted by a notch provided along the perimetric edge 4B of the first partition 4, with said edge 4B arranged in contact with the duct 2.

In other words, in the first embodiment the edge 4B provides a hermetic closure of the duct 2 and the orifice that forms the opening 7a is internal to the first partition 4 (to an inclined wall 4A thereof). In the second embodiment, instead, the continuity of the edge 4B (and its hermetic closure) is interrupted by a sort of dent or notch, which allows the bleeding or passage of air and defines the opening 7b.

It is useful to specify that the first partition 4 can have any number of openings 7a, 7b, be they orifices or notches, distributed at will, and optionally said first partition 4 can have one or more of the former and one or more of the latter.

The figures in any case show, merely by way of illustration, first partitions 4 respectively provided with two orifices and two notches, in both cases arranged on diametrically opposite sides with respect to the bottom surface 6 (and to the axis of symmetry of the cap 1).

In the preferred embodiment, which in any case does not limit the application of the invention, the cap 1 comprises a main body 11 (an outer shell) which is substantially axially symmetrical and is crossed longitudinally by the duct 2, with a substantially circular transverse cross-section. As clearly shown by the figures, in practice the body 11 is composed of a plurality of coaxially aligned cylindrical segments with variable diameter. In the preferred embodiment, a similar shape is moreover assumed by the duct 2.

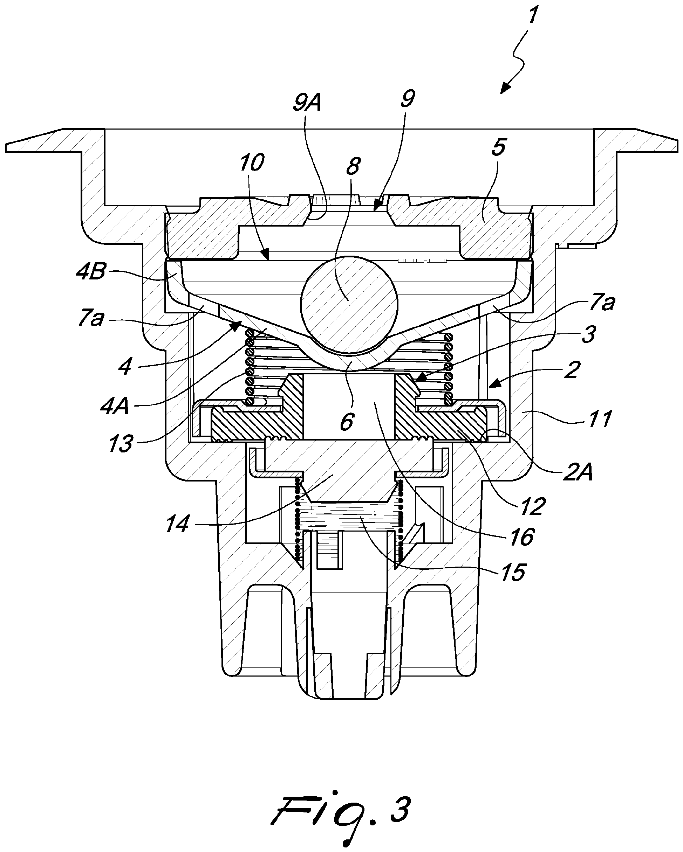

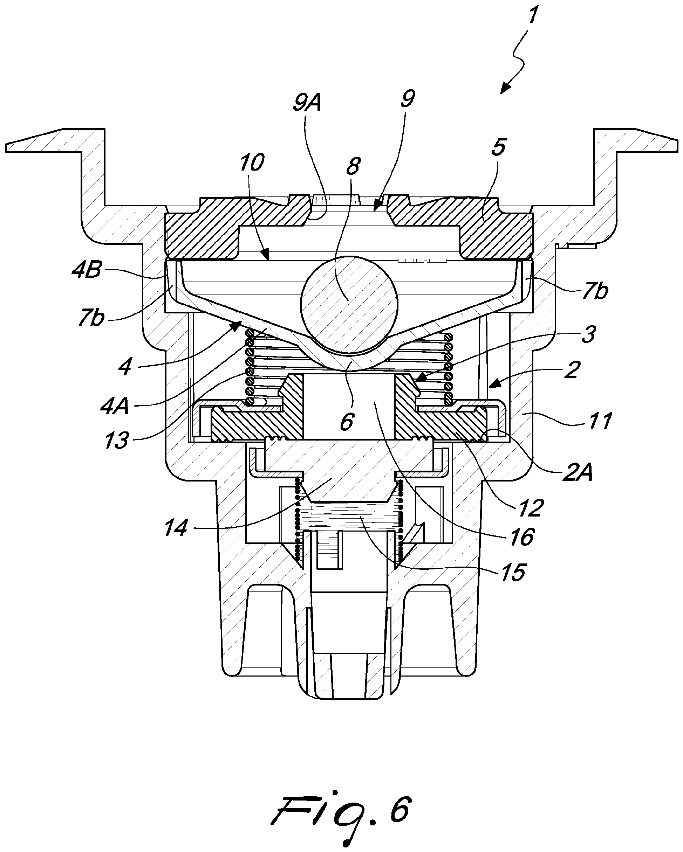

With further reference to the preferred embodiment, the first partition 4 has a substantially conical shape: the bottom surface 6 is therefore arranged at the vertex of the imaginary cone and is preferably rounded in order to ensure stable resting of the blocking element 8 (as clearly shown in Figures 3 and 6). In this context, therefore, the inclined wall 4A of the first partition 4 is in practice constituted by the lateral surface of the imaginary cone.

Furthermore, in the preferred embodiment the second partition 5 is substantially shaped like a flattened disc.

It should be specified in any case that all the constructive details given in the preceding paragraphs in relation to the preferred embodiment are merely examples and must not be understood in any way as limiting the application of the invention: the shape of the partitions 4, 5, of the body 11 and of the duct 2 may also be different from the ones indicated without thereby abandoning the protective scope claimed herein.

In an embodiment of considerable practical interest, which in any case does not limit the application of the invention, the flow control element 3 comprises at least one first diaphragm 12, which can move with play (axially) in the duct 2. In other words, the first diaphragm 12, which is preferably circular or in any case axially symmetrical, has a diameter or in any case dimensions that are smaller than those of the duct portion 2 in which it can move. The first diaphragm 12 is kept elastically pressed, with a perimetric flap thereof, against a narrower region 2A of the transverse cross-section of the duct 2 by a respective first spring 13 (or other elastic element). The configuration proposed above is the one shown in the accompanying figures (Figures 3 and 6 in particular show the first diaphragm 12 pressed against the narrower region 2A). The first spring 13 can be compressed elastically following an increase in the pressure value inside the tank and following the consequent displacement of the first diaphragm 12. In this manner, as a consequence of the displacement the first diaphragm 12 moves away from the narrower region 2A and allows the passage (bleeding) of fluids at least between its perimetric flap and the internal surface of the duct 2.

This allows the escape of air from the tank when the pressure value rises beyond a preset threshold (on the basis of which the first spring 13 is therefore sized).

Usefully, the flow control element 3 also comprises a second diaphragm 14, which is movable (axially and with play) in the duct 2 on the side opposite to the first spring 13 (toward the tank); the second diaphragm 14 (also preferably circular or in any case axially symmetrical) is kept during use pressed elastically against the first diaphragm 12 by a respective second spring 15 (or other elastic element), so as to close an opening 16 provided along the first diaphragm 12 (and preferably arranged along the axis of symmetry of the body 11). This configuration is clearly visible in Figures 3 and 6.

The second spring 15 can be compressed elastically following a decrease in the pressure value inside the tank and the consequent displacement of the second diaphragm 14.

In this manner, as a consequence of the displacement the second diaphragm 14 moves away from the opening 16 (the first diaphragm 12 remains motionless in this situation, pressing against the narrower region 2A) and allows the passage of air toward the tank in order to restore the normal pressure value.

The second diaphragm 14 moves under conditions that are the opposite of the ones that determine the displacement of the first diaphragm 12 and allows for example to introduce volumes of air that correspond to the volume of fuel consumed during the operation of the vehicle.

It is stressed moreover that during the movements of the diaphragms 12, 14 and the consequent displacements of air masses, which obviously also relate to the compartment 10, the element 8 is not affected at all (the air enters and exits from the openings 7a, 7b and from the hole 9, without skimming or displacing the element 8).

Advantageously, the rim 9A of the hole 9 forms a guide for the facilitated placement of the blocking element 8 so as to close the hole 9. In greater detail, and as shown by Figures 3 and 6, at least in a portion directed toward the first partition 4 the rim 9A has a flared (frustum-like) shape, to facilitate the positioning of the element 8 when the vehicle tilts/overturns or when the fuel fills the compartment 10.

In addition to the cap 1, the present description also relates to a tank for vehicles, which comprises a cap 1 according to what has been described so far. The tank is preferably the auxiliary one (optionally provided with the possibility of direct refueling), but the protection claimed herein is to be understood as extending to any tank for vehicles that is provided with one or more caps 1. In this context, the cap 1 can be arranged so as to close a path for communication to the outside detachably or non-detachably. In the first case, for example the body 11 can be provided with an external thread which allows its coupling by screwing (detachable) with a female thread provided along the communication path of the tank.

At the same time, a subject matter of the present description and of the production claimed therewith is also a vehicle (preferably but not exclusively a heavy vehicle, an articulated truck, a truck, an earth-moving machine, or another similar vehicle for professional use), which comprises at least one first tank, designed to accommodate fuel and provided with at least one filler configured for fuel refueling, and at least one second tank, arranged in communication with the first tank (which can be provided with a similar filler or not).

According to the invention, the second tank has a path for communication to the outside which is closed in a detachable or non-detachable manner by a cap 1 according to what has been described so far.

The operation of the cap according to the invention has already been described in practice, but a summary is in any case provided hereinafter.

The cap 1 is arranged along a path for communication between a tank of a vehicle (preferably but not exclusively the auxiliary one) and the outside environment, and during use is arranged so as to close said path, i.e., preventing the passage of air, liquids or other fluids. The cap 1 is preferably arranged on the top of the tank in the orientation in the accompanying figures: the flow control element 3 is arranged below the first partition 4 and the latter is below the second partition 5, while the openings 7a, 7b are arranged at a higher vertical elevation than the bottom surface 6.

In greater detail, under normal conditions (lack of stresses, overturnings, excessive increases or partial vacuums in the tank), the cap 1 is arranged in the configuration of the accompanying figures: the flow control element 3 closes the duct 2 by virtue of the cooperation of the first diaphragm 12 with the second diaphragm 14 (the latter closes the opening 16 of the former) while the flow control element 8 rests by gravity on the bottom surface 6.

Moreover, it has already been noted that any pressure variation inside the tank causes the displacement of one of the diaphragms 12, 14 and the compression of the corresponding spring 13, 15: therefore a passage for the air is opened which can enter or exit from the tank by flowing along the duct 2 and crossing the compartment 10 in particular, entering and exiting from the latter through the openings 7a, 7b and the hole 9, until the desired pressure conditions in the tank are restored. Again, in these situations the flow control element 8 remains stationary on the bottom surface 6: when the air descends into the compartment 10 through the hole 9, it enters directly the openings 7a, 7b (even if the thrust of the air is sufficient to move the element 8, it cannot obstruct all the openings 7a, 7b and in any case returns in a short time by gravity to the bottom surface 6).

Likewise, when the air flow originates from the tank, even if it is of high intensity (as in the initial moments of refueling) it flows directly toward the hole 9 without being able to affect the element 8 by virtue of the choice to arrange the openings 7a, 7b at a higher vertical elevation than that of the bottom surface 6.

The above is true in particular during the filling of the tank on which the cap 1 is mounted (the entering fuel obviously reduces the space available to the mass of air inside the tank and causes a pressure increase thereof), and therefore the escape of air that is needed to continue and complete refueling is regularly allowed.

When instead filling is completed, it is the fuel arriving from the tank that ends up flowing into the compartment 10 through the openings 7a, 7b: the fuel first settles on the bottom of said compartment 10 (on the first partition 4 and the bottom surface 6 in particular), to then rapidly rise. In this context, the element 8 is drawn upward by the fuel, until it moves against the second partition 5, reclosing the hole 9 and avoiding the danger of the escape of fuel.

Likewise, if the vehicle overturns (completely or even just partially, landing for example on one side), the element 8 again is moved against the second partition 5, so as to close the hole 9, by gravity (and subsequently under the pressure of the fuel that has entered the compartment 10).

In practice it has been found that the cap 1 according to the invention fully achieves the intended aim and objects, since it prevents in any condition the escape of fuel, at the same time ensuring adequate methods for the escape of the air. This result is obtained, moreover, with a solution that is structurally simple and at the same time assuredly effective and entails arranging the cap 1 so as to close (detachably or non-detachably) the communication path between the tank and the outside environment.

In particular, it has also been noted that the cap 1 does not require any interaction with the user during refueling or in any other practical condition and therefore can be used effectively to avoid the danger of escape of the fuel, not only during any overturning of the vehicle but also more simply during the refueling of another tank of the same vehicle, which is connected to the one on which the cap 1 is mounted.

The various functionalities performed by the cap 1 in different practical contexts and in case of accident (overturning of the vehicle), obtained with a solution that is structurally simple and is highly reliable in operation, make it possible to comply with the varied and possibly contrasting requirements dictated by customers and/or by applicable standards.

The invention thus conceived is susceptible of numerous modifications and variations, all of which are within the scope of the accompanying claims; all the details may furthermore be replaced with other technically equivalent elements.

In the examples of embodiment shown, individual characteristics, given in relation to specific examples, may actually be interchanged with other different characteristics that exist in other examples of embodiment.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A cap for vehicle tanks, which can be arranged during use so as to close a communication path between a tank of a vehicle and the outside environment and is provided internally with a through duct (2), which is normally closed by a flow control element (3), which can move elastically at least following an increase in the value of the pressure inside the tank, in order to allow the temporary escape of air from the tank until the pressure value decreases, **characterized in that** it comprises a first partition (4) for closing said duct (2), which is arranged in series to said flow control element (3) and, during use, on the side opposite to the tank, and a second partition (5) for closing said duct (2), which is arranged in series to said first partition (4) on the side opposite to said flow control element (3), said first partition (4) substantially having a shape that is inclined toward a bottom surface (6) which during use is arranged at a minimal vertical elevation and forms at least one opening (7a, 7b), which during use is arranged at a higher vertical elevation than that of said bottom surface (6), a blocking element (8) being free to move between said partitions (4, 5) within said duct (2), normally resting, during use, on said bottom surface (6), and being provided with a contour that is suitable for the automatic closure of a hole (9) provided in said second partition (5), following the optional displacement of said element (8) toward said second partition (5).

2. The cap according to claim 1, **characterized in that** said element (8) is shaped like a sphere and has a diameter that is larger than the diameter of said hole (9), which has a circular shape.

3. The cap according to claim 2, **characterized in that** said element (8) is shaped like a hollow sphere, configured for floating on the free surface of the fuel intended to refill the vehicle and stowable in the tank, for its automatic placement so as to close said hole (9), when, during use, the compartment (10) delimited by said partitions (4, 5) and said duct (2) is filled by the fuel.

4. The cap according to one or more of the preceding claims, **characterized in that** said element (8) has a density comprised between 0.88 g/cm³ and 0.99 g/cm³ and preferably has a density equal to 0.92 g/cm³.

5. The cap according to one or more of the preceding claims, **characterized in that** said at least one opening (7a) is constituted by an orifice provided along an inclined wall (4A) of said first partition (4).

6. The cap according to one or more of claims 1-4, **characterized in that** said at least one opening (7b) is constituted by a notch provided along the perimetric edge (4B) of said first partition (4), arranged in contact with said duct (2).

7. The cap according to one or more of the preceding claims, **characterized in that** it comprises a substantially axially symmetrical main body (11) which is crossed longitudinally by said duct (2), having a substantially circular transverse cross-section.

8. The cap according to one or more of the preceding claims, **characterized in that** said first partition (4) has a substantially conical contour, said bottom surface (6) being arranged at the imaginary vertex and being preferably rounded for the stable resting of said element (8).

9. The cap according to one or more of the preceding claims, **characterized in that** said second partition (5) is substantially shaped like a flattened disc.

10. The cap according to one or more of the preceding claims, **characterized in that** said flow control element (3) comprises at least one first diaphragm (12), which can move with play in said duct (2) and is kept pressed elastically, with a perimetric flap, against a narrower region (2A) of the transverse cross-section of said duct (2), by a respective first spring (13), which can be compressed elastically following an increase in the pressure value inside the tank and the consequent displacement of said first diaphragm (12).

11. The cap according to claim 10, **characterized in that** said flow control element (3) comprises a second diaphragm (14), which can move in said duct (2) on the side opposite to said first spring (13) and is kept during use pressed elastically against said first diaphragm (12), in order to close an opening (16) provided along said first diaphragm (12), by a respective second spring (15), which can be compressed elastically following a decrease in the value of the pressure inside the tank, and the consequent displacement of said second diaphragm (14).

12. The cap according to one or more of the preceding claims, **characterized in that** the rim (9A) of said hole (9) forms a guide for the facilitated placement of said element (8) so as to close said hole (9).

13. A tank for vehicles, **characterized in that** it comprises a cap (1) according to one or more of the preceding claims, arranged detachably or non-detachably so as to close a path for communication to the outside.

14. A vehicle, comprising at least one first tank, designed to accommodate fuel and provided with at least one filler configured for refueling, and at least one second tank, arranged in communication with said first tank, **characterized in that** said second tank has a path for communication with the outside which is closed detachably or non-detachably by a cap (1) according to one or more of the preceding claims.
